# EUROPEAN PATENT APPLICATION

(11) **EP 3 429 156 A1**
(43) Date of publication of application: **16.01.2019**
(21) Application number: 17305919.7
(22) Date of filing: 12.07.2017
(51) Int. Cl.: H04L 29/06

(54) **METHOD FOR GRANTING ACCESS TO A USER TO AN ASSET**

(71) Applicant: GEMALTO SA, 92190 Meudon (FR)
(72) Inventor: HUGOT, Didier, 13881 GEMENOS cedex (FR); TRESSOL, Ludovic, 13881 GEMENOS cedex (FR)

(57) **Abstract**

The invention concerns a method for granting access to a user (12) to an asset managed in the infrastructure of a third party (10) in a cloud-based environment, in order to perform at least an action on that asset, the method consisting in:
- Requesting (1) by the user (12) access to the asset at the third party (10);
- Redirecting (2) the request from the third party (10) to an identity provider (11);
- Authenticate the user (12) by the identity provider (11);
- If the user (12) needs the authorization of an authorizer (13) to get access to the asset, in function of access policies containing rules defined at the level of the identity provider (11),
the rules being dependent of the user (12), the action and the asset, pushing (5) the request to at least one authorizer (13) in order to get the access granted for the user (12) to perform the action;
- Authorize the user (12) to access to the asset to perform the action only if all authorizers (13) have granted access of the user (12) to the asset.

## Description

The present invention relates to security, identity and access management of cloud services. In the state of the art, applications such as web sites for example, are hosted in datacenters. These applications provide services or assets provided by service providers. The datacenters are accessible via Internet and a datacenter comprises at least a server on which the application is running. In the case of a web site, it can be for example a web site of a merchant.

In datacenters, physical and logical security are managed by segmenting applications into different security zones depending on security needs (example: DMZ, security level 1, 2 or 3). The more secure is the zone and more security constraints are applied to the access management. For example the access to a security level 3 requires to have a minimum of 2 people presenting their authentication credential, we also refer as dual control processes. Another example is the key ceremony process which involve 3 different people owning each a part of key (split into 3 pieces). With such a process, such key operation can be allowed only if those 3 people are physically present and doing sequential actions one after each other.

However, self-owned physical datacenters are more and more abandoned, with solutions being migrated into the cloud leveraging on cloud infrastructures provided by companies like Amazon™, Microsoft™ or Google™ for example. The reason is that the merchant needs to have his own infrastructure (for example numerous physically distributed servers around the world) and this is costly. Such companies are cloud providers that propose computing infrastructure - virtual machines and other resources - as a service to subscribers. This corresponds to Infrastructure as a service (laaS). This permits to offer online services that abstract the subscriber to such services from the details of infrastructure like physical computing resources (servers and memory), location, data partitioning, scaling, security, backup etc.

Such cloud providers usually provide an identity and access management service which allows operations to manage their infrastructure and provide a fine-grained access & authorizations to the different employees (example: grant an access to the database to one person, the possibility to create VM to another one and so on...)

The problem with cloud providers, is that the subscriber to a laaS service has less control to his application(s) in terms of security compared to physical datacenters.

Despite the fact that cloud providers are enhancing their account security through software or hardware MFA (Multi-Factor Authentication), they don't provide multi-user authentication feature:
- It is then not possible to have the same level of security described previously (example of the security level 3 zone)
- The main account of the cloud provider subscription has all rights and is then a very high sensitive asset to protect (the access to this account could for example allow to fully wipe a production environment) and it lacks of dual control, that would be mandatory.
- The main issue is an insider attack: A unique user owning the account to access the sensitive asset is a threat for the security of the whole ecosystem.

The proposed invention proposes a solution to this problem.

More precisely, the invention proposes a method for granting access to a user to an asset managed in the infrastructure of a third party in a cloud-based environment, in order to perform at least an action on that asset, the method consisting in:
- Requesting by the user access to the asset at the third party;
- Redirecting the request from the third party to an identity provider;
- Authenticate the user by the identity provider;
- If the user needs the authorization of an authorizer to get access to the asset, in function of access policies containing rules defined at the level of the identity provider, the rules being dependent of the user, the action and the asset, pushing the request to at least one authorizer in order to get the access granted for the user to perform the action;
- Authorize the user to access to the asset to perform the action only if all authorizers have granted access of the user to the asset.

In one embodiment, the identity provider is located in the infrastructure of the third party.

In another embodiment, the identity provider is located in another place than the infrastructure of the third party.

Preferably, the authorizers have to authenticate themselves to the identity provider in function of the user, the action and the asset.

The invention also concerns an identity provider conceived for receiving a request to access an asset of a service provider by a user wishing to execute an action on the asset, the identity provider cooperating with means comprising access policies containing rules being dependent of the user, the action and the asset, the identity provider pushing the request to at least one authorizer in order to get the access granted for the user to perform the action if the user needs the authorization of an authorizer to get access to the asset, the identity provider authorizing the user to access to the asset to perform the action only if all authorizers have granted access of the user to the asset.

The invention will be better understood with the following description of a preferred implementation of the invention and with the accompanying figures that show:
- Figure 1, an example of the flow illustrating the access to a sensitive asset according to the invention;
- Figure 2, an example of an access policy.

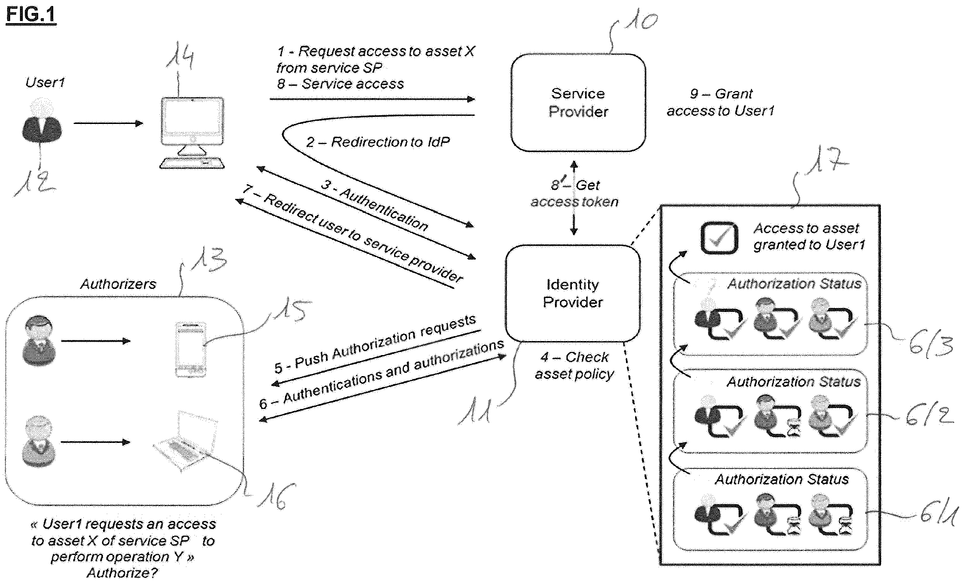

Figure 1 represents an example of the flow illustrating the access to a sensitive asset according to the invention.

The following actors are involved in the process:
- A service provider 10 that is a cloud entity which manages an infrastructure hosting applications and sensitive assets. The service provider 10 provides its own access and identity management to identify and authorize people to access to the infrastructure components. It provides also an option to delegate the authentication and authorization to a trusted identity provider 11 (or IdP) using well-known protocols such as SAML (Security Assertion Markup Language) or OIDC (OpenID Connect). The delegation of the authentication and authorization to the identity provider 11 is the preferred mode in the invention so the invention can be implemented without any impact on the cloud provider 10.
- A user 12 who is a person willing to access to one or multiple assets of the service provider infrastructure 10 (typically people from operational teams). This user has to perform some types of actions on the asset (read/modify,...) which possibly requires different types of security.
- Authorizers 13 that are people able to give their approval to have the user 12 accessing the service provider assets. Depending on the sensitiveness of the asset, one or multiple authorizers could be involved. Here, two authorizers are represented. Authorizers 13 are trusted persons like for example security officers who can grant the access to a sensitive asset but without being themselves allowed to access it.
- The identity provider 11 is the main component enabling the working of the invention.
   It is a trusted entity responsible for:
   - Authenticating the user 12 and authorizers 13 with support of multi-factor authentication: That can be software or hardware means. The required level of authentication depends on the sensitiveness of the asset and the action.
   - Pushing authorization requests to authorizers 13 on their preferred device (mobile phone, tablet, computer...);
   - Managing authorizations from authorizers 13;
   - Managing authentication policies for the different assets. A first example of policy is "access to asset X1 is granted to any authenticated user with role Y1." Another example is "access to asset X2 is granted to any user with role Y2 authenticated with at least two form factors if and only if authorizers A1 and A2 give their consent."
      Examples of other policies will be given later.
      - Authentication and authorization devices 14-16 are devices used by the user 12 and authorizers 13 to:
      - Receive notifications from identity provider 11 (requests for authentication and authorization). For example: "User 1 has been authenticated using his corporate badge and requests an access to the asset X1 of service provider SP";
      - Manage authentications and authorizations.

A non-exhaustive list of such devices 14-16 is composed of computers, mobile phones, tablets, dongles, USB keys... Several devices could be combined in the authentication process to manage for instance out-of-band authentications.

The workflow of figure 1 is the following:
In a first step 1, the user 12 requests access to an asset X from service provider 10. The asset is managed in the infrastructure of a third party that is the service provider 10 in a cloud-based environment. The user 12 wishes to perform at least an action on that asset.
In a second step 2, the request is redirected to the identity provider 11.

An authentication (step 3) occurs then between the user 12 and the identity provider 11 (login/password for example).

Once the user 12 has been authenticated by the identity provider 11, the identity provider checks (step 4) the policy of the access to the asset. For doing that, the identity provider 11 pushes (step 5) authorization requests to the authorizers 13. For example, as shown in figure 1 "User 1 requests an access to asset X of service provider SP to perform operation Y? Do you authorize such an access ?" Each authorizer is asked to give his approval to allow the user to access a resource to perform a specific action.

The authorizers 13 authenticate themselves with the required level of authentication as specified in the policy with the identity provider 11 (as it will be seen later with the required level of authentication as specified in the policy) and grant (or not) access to user 1 to the asset X. These authorizations to access to the asset are done one after the other and the identity provider regularly checks if all the authorizers have given their consent. This is represented in box 17 of figure 1: At step 6/1, one authorizer has given his consent for the access and two other authorizers didn't answer to the authorization request, at step 6/2, another authorizer has given his authorization and the identity provider is waiting for the consent of a third authorizer, and at step 6/3, all requested authorizers have given their consent. The different steps shown in box 17 can be seen by the user 12.

The identity provider 11 can then (steps 7 and 8) redirect the user 12 to the service provider 10 and give access (step 9) to the requested service. In parallel of steps 7 and 8, and before step 9, the service provider 10 gets an access token (step 8') from the identity provider 11.

An alternative to redirect the user 12 to the service provider 10 is to push a notification to the user to indicate that all approvals happened and that the access is granted.

A typical application of the invention is when someone from operations needs to make a maintenance operation on a HSM (stored in the cloud, and so without any physical access), a defined security policy for accessing this asset is put in place. For example, at least two authorized people ("authorizers") have to give their consent to have the user accessing the HSM.

The identity provider 11 can be located in the infrastructure of the service provider (third party) or in another place. Its management can be done by a single party or, alternatively, the service provider is managed by a first party and the identity provider is managed by another party.

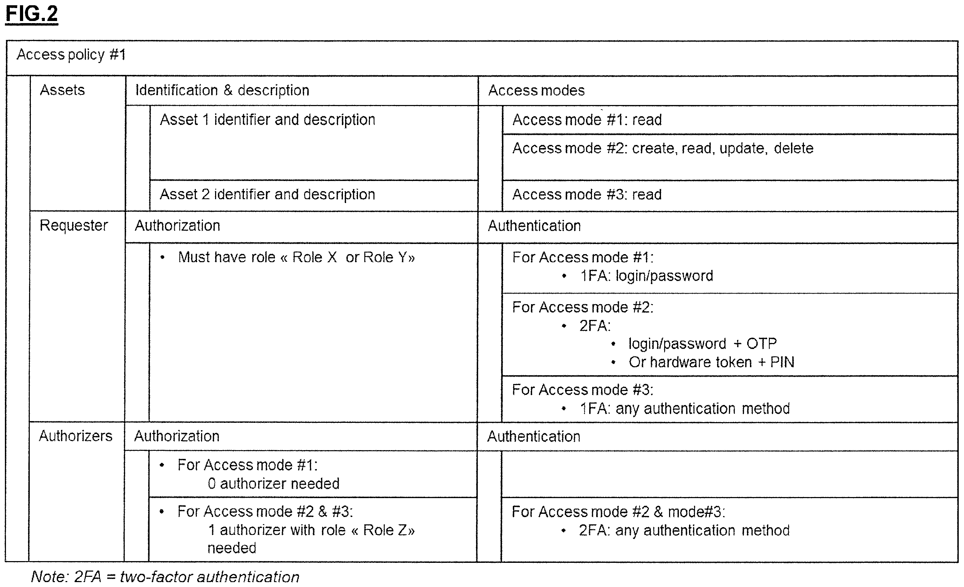

Figure 2 shows an example of an access policy, like implemented at the level of the identity provider 11.

The access policy is here Access policy #1.

It comprises for each asset (here asset 1 and asset 2), and identification and a description. To each asset corresponds an access mode (an action). For example, as shown, for asset 1, three access modes are possible:
- Access mode #1: it is possible to read only the content of the asset;
- Access mode #2: it is possible to create, read, update and delete the asset.
   For another asset (asset 2), only a read access is allowed (access mode #3).

For each requester (user), a role is mandatory. This role is defined thanks to his authentication (step 3 of figure 1) to the identity provider.

For example, for accessing mode #1 (read asset 1), a login/password is sufficient (one factor authentication - 1 FA). If the user wants to access mode #2 (create, read, update or delete the asset), a two-factor authentication is required (2FA), for example:
- Login/password and an OTP (One Time Password), or
- Hardware token (card for example or dongle) and a PIN code.

For accessing mode #3 (read asset 2), a 1 FA is sufficient (for example login/password or OTP).

The access policy #1 defines also rules defining if and how many authorizers are required. Here, if the user wants only to read asset 1, no authorizer is required.

On the contrary, if the user wants to access mode #2 or mode #3, the authorization of one authorizer having a defined role (role Z) is required and this authorizer will have to authenticate himself with a 2FA method.

The authorizers have therefore to authenticate themselves to the identity provider in function of the user, the action and the asset. This occurs at step 6 of figure 1.

The access policy to an asset can be modified easily by the service provider 10 in order to ensure the security of assets hosted by a cloud provider and thus to ensure that a unique insider is no more a threat for the ecosystem.

As can be seen in figure 2, the policy manages the authentication levels required for a user and authorizers for each access mode required for executing a specific action. For example, a 2FA authentication can be required for specific sensitive tasks.

The invention also proposes an identity provider 11 conceived for receiving a request to access an asset of a service provider 10 by a user 12 wishing to execute an action on the asset, the identity provider 11 cooperating with means comprising access policies containing rules being dependent of the user 12, the action and the asset, the identity provider 11 pushing the request to at least one authorizer 13 in order to get the access granted for the user 12 to perform the action if the user 12 needs the authorization of an authorizer 13 to get access to the asset, the identity provider 11 authorizing the user 12 to access to the asset to perform the action only if all authorizers 13 have granted access of the user 12 to the asset. The invention can be implemented without any changes on the cloud provider side thanks to identity federation concepts (delegation of authentication and authorization to an identity provider).

## Claims

1. Method for granting access to a user (12) to an asset managed in the infrastructure of a third party (10) in a cloud-based environment, in order to perform at least an action on that asset, the method consisting in:
- Requesting (1) by said user (12) access to said asset at said third party (10);
- Redirecting (2) said request from said third party (10) to an identity provider (11);
- Authenticate said user (12) by said identity provider (11);
- If said user (12) needs the authorization of an authorizer (13) to get access to said asset, in function of access policies containing rules defined at the level of said identity provider (11),
said rules being dependent of said user (12), said action and said asset, pushing (5) said request to at least one authorizer (13) in order to get said access granted for said user (12) to perform said action;
- Authorize said user (12) to access to said asset to perform said action only if all authorizers (13) have granted access of said user (12) to said asset.

2. Method according to claim 1, wherein said identity provider (11) is located in said infrastructure of said third party (10).

3. Method according to claim 1, wherein said identity provider (11) is located in another place than said infrastructure of said third party (10).

4. Method according to any of the claims 1 to 3, wherein said authorizers (13) have to authenticate themselves to said identity provider (11) in function of said user (12), said action and said asset.

5. Identity provider (11) conceived for receiving a request to access an asset of a service provider (10) by a user (12) wishing to execute an action on said asset, said identity provider (11) cooperating with means comprising access policies containing rules being dependent of said user (12), said action and said asset, said identity provider (11) pushing (5) said request to at least one authorizer (13) in order to get said access granted for said user (12) to perform said action if said user (12) needs the authorization of an authorizer (13) to get access to said asset, said identity provider (11) authorizing said user (12) to access to said asset to perform said action only if all authorizers (13) have granted access of said user (12) to said asset.
